# EUROPÄISCHE PATENTSCHRIFT

(11) **EP 2 368 058 B1**
(45) Veröffentlichungstag und Bekanntmachung des Hinweises auf die Patenterteilung: **07.01.2015**
(21) Anmeldenummer: 09795309.5
(22) Anmeldetag: 12.11.2009
(51) Int. Cl.: F02D 41/02, F02N 15/06, F16D 7/02, F16F 15/129, F02N 15/02

(54) **ANLASSERSCHEIBE MIT RUTSCHKUPPLUNG**
STARTER MOTOR DISC HAVING SLIP CLUTCH
VOLANT DE DÉMARREUR À ACCOUPLEMENT À FRICTION

(30) Priorität: 24.11.2008 DE 102008058686
(43) Veröffentlichungstag der Anmeldung: 28.09.2011
(73) Patentinhaber: Schaeffler Technologies GmbH & Co. KG, 91074 Herzogenaurach (DE)
(72) Erfinder: IZSO, Gabor, Budapest 1214 (HU)
(86) Internationale Anmeldenummer: PCT/DE2009/001620
(87) Internationale Veröffentlichungsnummer: WO 2010/057468

(56) Entgegenhaltungen:
- EP-A1- 0 924 425
- EP-A1- 1 528 283
- CA-A1- 2 497 190
- GB-A- 2 064 682
- JP-A- 63 018 185
- US-A- 1 453 129
- US-A- 1 845 637

## Beschreibung

Die vorliegende Erfindung betrifft eine Anlasserscheibe zur Anordnung im Antriebsstrang eines Kraftfahrzeugs. Die Erfindung betrifft fernerhin eine Anlassereinheit umfassend eine solche Anlasserscheibe.

Eine Anlasserscheibe oder auch Anlasserrad dient dazu, das Drehmoment eines Anlassers mittelbar oder unmittelbar auf die Kurbelwelle des Verbrennungsmotors eines Kraftfahrzeugs zu übertragen, um diesen anzulassen bzw. zu starten. Ein solcher Anlasser kann bspw. ein Elektromotor sein, der über die Fahrzeugbatterie betrieben ist. Im Sinne der Patentanmeldung umfasst der Begriff Kraftfahrzeuge auch Lastkraftwagen, Landmaschinen und dergleichen. Eine Anlasserscheibe umfasst einen Anlasserzahnkranz, der auf einem Scheibenkörper bzw. Zahnkranzträger angeordnet ist. In die Zahnräder des Anlasserzahnkranzes greift ein Ritzel des Anlassers ein und treibt den Anlasserzahnkranz zusammen mit dem Scheibenkörper rotatorisch an.

Ein Anlasserzahnkranz ist bspw. aus der DE 10 2005 021 161 A1 derselben Anmeldering bekannt. Eine weitere Anlasserscheibe ist aus der JP 63 018 185 bekannt.

Nachteilig bei den aus dem Stand der Technik bekannten Lösungen ist, dass insbesondere zu Beginn des Startvorgangs hohe Drehmomente auftreten. Dies führt zu dynamischen Effekten, die vom Fahrer als subjektiv störend empfunden werden können.

Eine Aufgabe der Erfindung ist es, das beim Anlassen eines Verbrennungsmotors übertragene Drehmoment zu begrenzen.

Diese Aufgabe wird gelöst von einer Anlasserscheibe gemäß Anspruch 1. Vorteilhafte und bevorzugte Weiterbildungen sind Gegenstand der hiervon abhängigen Ansprüche. Eine Anlassereinheit umfassend eine erfindungsgemäße Anlasserscheibe ist Gegenstand eines nebengeordneten Anspruches. Deren vorteilhafte und bevorzugte Weiterbildungen sind Gegenstand der hiervon abhängigen Ansprüche.

Erfindungsgemäß wird eine Anlasserscheibe zur Anordnung im Antriebsstrang eines Kraftfahrzeugs, vorgeschlagen umfassend einen Scheibenkörper und einen Anlasserzahnkranz, der am Außenumfang des Scheibenkörpers angeordnet ist, wobei der Scheibenkörper und der Anlasserzahnkranz als separate Teile bzw. Komponenten ausgebildet sind, zwischen denen eine Rutschkupplung wirksam ist, um das übertragbare Drehmoment vom Anlasserzahnkranz auf den Scheibenkörper zu begrenzen.

Der Scheibenkörper kann auch als Zahnkranzträger bezeichnet werden. Der Scheibenkörper ist bevorzugt als Lochscheibe, als Vollscheibe oder als Ringkörper ausgebildet. Der Anlasserzahnkranz ist bevorzugt als Ringkörper ausgebildet und weist bevorzugt eine Außenverzahnung auf, die auf dessen Außenumfangsfläche ausgebildet ist. Der Scheibenkörper und/oder der Zahnkranzträger können einteilig oder mehrteilig ausgebildet sein.

Die erfindungsgemäße Lösung hat viele Vorteile. Ein wesentlicher Vorteil ist darin zu sehen, dass auf einfache und damit auch kostengünstige Weise das mit der Anlasserscheibe übertragbare Drehmoment begrenzt wird. Damit kann auch das Drehmoment zwischen dem Anlasser und dem Verbrennungsmotor begrenzt bzw. limitiert werden. Als Folge können wesentliche Bauteile des Systems für ein geringeres Maximalmoment ausgelegt werden, was Bauraum, Gewicht und Kosten einspart. Weiterhin werden die konstruktiven Freiheitsgrade erhöht, bspw. indem nunmehr auch Kunststoffteile verwendet werden können. Zudem kann die Geräuschentwicklung beim Starten bzw. Anlassen des Verbrennungsmotors reduziert und die subjektiv wahrnehmbare Startqualität bzw. Anlassqualität verbessert werden.

Gemäß einer bevorzugten Weiterbildung ist vorgesehen, dass zwischen der Innenumfangsfläche des Anlasserzahnkranzes und der Außenumfangsfläche des Scheibenkörpers ein Reibschluss gegeben ist, mittels dessen ein Drehmoment vom Anlasserzahnkranz auf den Scheibenkörper übertragbar ist, wobei über diesen Reibschluss gleichfalls die Rutschkupplung realisiert ist. Eine derartige quasi integrierte Rutschkupplung ist in vorteilhafter Weise sowohl platzneutral als auch kostengünstig in der Herstellung bzw. Montage. Bei der Rutschkupplung handelt es sich demnach um eine Reibkupplung.

Gemäß einer bevorzugten Weiterbildung ist vorgesehen, dass die Innenumfangsfläche des Anlasserzahnkranzes konisch und die Außenumfangsfläche des Scheibenkörpers korrespondierend hierzu ebenfalls konisch ausgebildet ist. Auf diese Weise können bei einer gleichen axialen Breite die korrespondierenden Reibflächen vergrößert werden.

Gemäß einer bevorzugten Weiterbildung ist vorgesehen, dass der Anlasserzahnkranz mit seiner konischen Innenumfangsfläche gegen die konische Außenumfangsfläche des Scheibenkörpers gedrückt wird, wozu der Anlasserzahnkranz in einer axialen Richtung mit einer Kraft beaufschlagt ist. Die axiale Richtung ist durch die Rotationsachse der Anlasserscheibe bestimmt. Die Kraftbeaufschlagung des Anlasserzahnkranzes erfolgt in Richtung auf den Scheibenkörper. Im Falle der konischen Ausbildung der Kontaktflächen bzw. Reibflächen ist bevorzugt vorgesehen, dass eine konische Aufweitung der Reibflächendurchmesser in der Richtung der axialen Kraftaufbringung erfolgt. Dadurch werden die korrespondierenden Reibflächen in der Art eines Reibungskegels verstärkt aneinander gepresst. Die sich ergebende Reibkraft F_{R} kann näherungsweise über das Coulombsche Reibgesetz F_{R} = µ · F_{N} bestimmt werden, wobei F_{N} der in Axialrichtung aufgebrachten Normalenkraft entspricht, mit welcher der Anlasserzahnkranz gegen den Scheibenkörper gedrückt wird, und µ den Reibwert bzw. Reibbeiwert der Reibflächenpaarung angibt. Das zwischen dem Anlasserzahnkranz und dem Scheibenkörper übertragbare Drehmoment ist damit durch Wahl der axialen Kraft bzw. Druckkraft, mit welcher der Anlasserzahnkranz gegen den Scheibenkörper gedrückt oder gepresst wird, einstellbar.

Gemäß einer bevorzugten Weiterbildung ist vorgesehen, dass der Anlasserzahnkranz mittels wenigstens einer Tellerfeder in der axialen Richtung kraftbeaufschlagt ist. Eine Tellerfeder kann in vorteilhafter Weise bei einem geringen axialen Platzbedarf hohe axiale Kräfte erzeugen.

Gemäß einer bevorzugten Weiterbildung hiervon ist vorgesehen, dass die Tellerfeder mit einer Lochung bzw. gelocht, oder mit Ausnehmungen, ausgebildet ist. Dies führt zu einer Gewichtsersparnis und kann auch die Elastizität der Tellerfeder verbessern. Zudem kann über die Lochung die Federkraft bzw. Elastizität eingestellt werden. Weiterhin kann durch die Lochung eine verbesserte Kühlung erreicht werden.

Gemäß einer bevorzugten Weiterbildung ist vorgesehen, dass die Tellerfeder im Bereich ihres Innendurchmessers mittels eines Flansches vorgespannt ist, wobei dieser Flansch drehfest mit dem Scheibenkörper verbunden ist. Bevorzugt ist vorgesehen, dass die Tellerfeder mit ihrem radial äußeren Bereich gegen den Anlasserzahnkranz drückt und sich mit ihrem radial inneren Bereich abstützt. Der radial innere Bereich bzw. Bereich des Innendurchmessers lässt sich bevorzugt als ein an einer zentralen Ausnehmung bzw. Öffnung der Tellerfeder radial angrenzender Bereich auffassen. Bevorzugt ist der Flansch als Blechflansch ausgebildet und mit dem Scheibenkörper vernietet.

Eine erfindungsgemäße Anlassereinheit zur Anordnung im Antriebsstrang eines Kraftfahrzeugs umfasst eine erfindungsgemäße Anlasserscheibe, in der zuvor beschriebenen Art.

Gemäß einer bevorzugten Weiterbildung der Anlassereinheit ist vorgesehen, dass die Anlasserscheibe mittels wenigstens eines Wälzlagers am Motorblock des Kraftfahrzeugs abgestützt bzw. befestigt ist.

Erfindungsgemässes ist vorgesehen, dass die Anlasserscheibe mittels eines Freilaufs mit einer Schwungscheibe oder einem Zweimassenschwungrad des Antriebsstranges verbunden ist. Bevorzugt ist die Anlasserscheibe mit der Primärschwungscheibe bzw. Primärschwungmasse eines Zweimassenschwungrades verbunden. Unter einem Freilauf wird eine mechanische Einrichtung verstanden, die einen Teil eines Antriebstranges von der Drehbewegung definiert entkoppelt, wenn sich die Lastverhältnisse ändern.

Alternativ kann die erfindungsgemäße Anlasserscheibe auch als Schwungrad ausgebildet sein. Hierbei kann insbesondere vorgesehen sein, dass die Anlasserscheibe als Primärschwungrad eines Zweimassenschwungrades ausgebildet ist.

Im Folgenden wird ein bevorzugtes Ausführungsbeispiel der Erfindung anhand der beiliegenden Zeichnungen erläutert. Dabei zeigen:
- Fig. 1: ein Ausführungsbeispiel der erfindungsgemäßen Anlasserscheibe in einer perspektivischen Ansicht;
- Fig. 2: einen Schnitt durch die Anlasserscheibe der Fig. 1, gemäß dem Schnittverlauf A-A;
- Fig. 3: eine Detailansicht aus der Fig. 2; und
- Fig. 4: eine bevorzugte Anordnung der Anlasserscheibe im Antriebsstrang eines Kraftfahrzeugs in einer schematischen Ansicht.

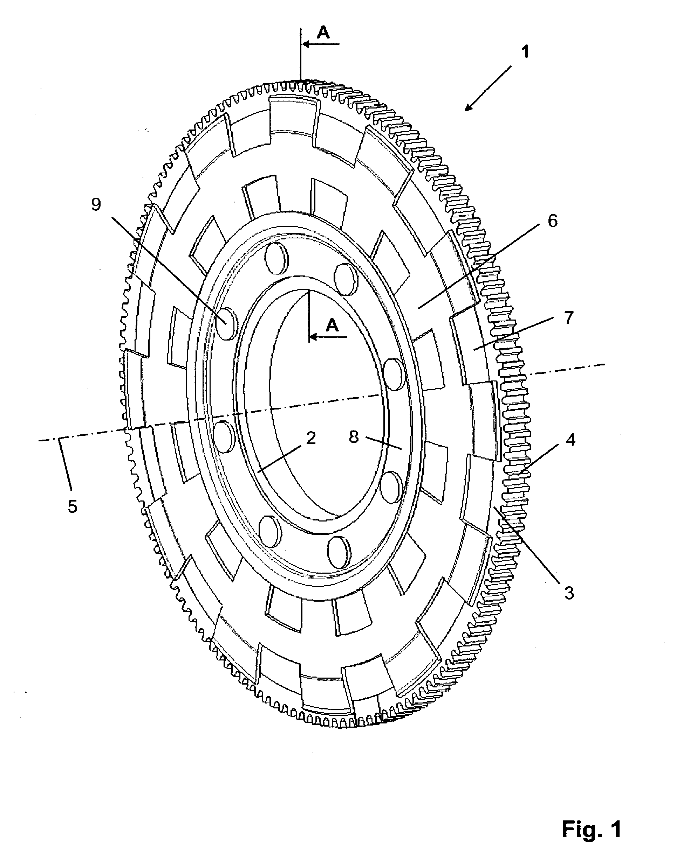

Die Fig. 1 zeigt eine insgesamt mit 1 bezeichnete erfindungsgemäße Anlasserscheibe. Die Anlasserscheibe 1 umfasst einen Scheibenkörper bzw. Zahnkranzträger 2, an dessen Außenumfang bzw. Außenumfangsfläche ein Anlasserzahnkranz 3 mit einer Außenverzahnung 4 angeordnet ist. In die Außenverzahnung 4 kann das Ritzel eines nicht gezeigten Anlassers eingreifen. Der Scheibenkörper 2 und der Anlasserzahnkranz 3 sind als separate Teile bzw. Bauteile ausgebildet, die zueinander eine rotatorische und/oder eine axiale Bewegung ausführen können. Die axiale Bewegung bezieht sich auf die zentrale Drehachse bzw. Rotationsachse 5. Die Anlasserscheibe 1 umfasst weiterhin eine Tellerfeder 6 mit einer Lochung 7, welche den Anlasserzahnkranz 3 in einer axialen Richtung gegen den Scheibenkörper 2 drückt, wie nachfolgend noch näher erläutert. Die Tellerfeder 7 ist über einen Flansch 8 mittels von Nieten 9 am Scheibenkörper 2 drehfest befestigt. Anstelle einer Vernietung kann auch eine Verschweißung oder dergleichen vorgesehen sein.

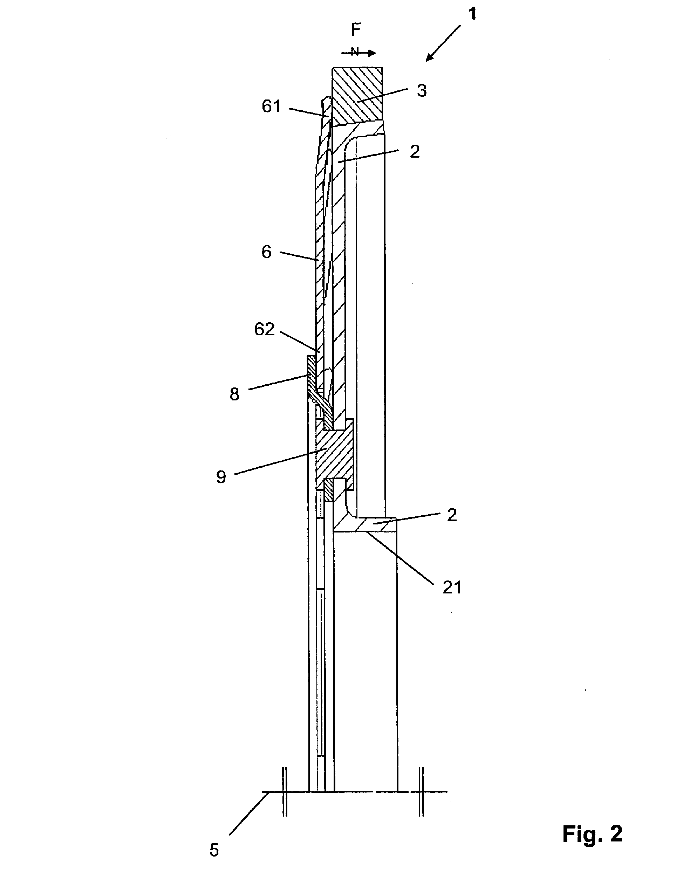

Die Fig. 2 zeigt die Anlasserscheibe 1 der Fig. 1 in einer Schnittansicht gemäß dem angegebenen Schnittverlauf A-A in der Fig. 1. Dargestellt ist hier nur die obere Symmetriehälfte der Anlasserscheibe 1, d.h. oberhalb der Rotationsachse 5. Wie bereits oben dargelegt, sind der Scheibenkörper 2 und der Anlasserzahnkranz 3 als separate Teile bzw. Komponenten ausgebildet. Der Anlasserzahnkranz 3 liegt hierbei mit seiner Innenumfangsfläche an einer Außenumfangsfläche des Scheibenkörpers 2 an. Zwischen den beiden Kontaktflächen ist ein Reibschluss gegeben, über den sich in Umfangsrichtung Drehmomente vom Anlasserzahnkranz 3 auf den Scheibenkörper 2 übertragen lassen. Bei Überschreitung einer maximal übertragbaren Kraft bzw. eines maximal übertragbaren Drehmoments beginnen diese Kontaktflächen aufeinander abzurutschen bzw. abzugleiten, wodurch eine rotatorische Relativbewegung zwischen dem Anlasserzahnkranz 3 und dem Scheibenkörper 2 gegeben ist. Auf diese Weise kann das maximal übertragbare Drehmoment vom Anlasserzahnkranz 3 auf den Scheibenkörper 2 begrenzt werden. Bei Unterschreiten der maximal übertragbaren Kraft bzw. des maximal übertragbaren Drehmomentes tritt wiederum Reibschluss ein.

Wie in der Fig. 2 gezeigt, sind die Kontaktflächen, d.h. die Außenumfangsfläche des Scheibenträgers 2 und die Innenumfangsfläche des Anlasserzahnkranzes 3, konisch ausgebildet, d.h. diese Kontaktflächen weisen gemäß der gezeigten Darstellung in der axialen Richtung von links nach rechts einen ansteigenden Durchmesser auf. Aufgrund dieser Ausbildung werden zum einen die Kontaktflächen gegenüber einer zylindrischen Ausbildung vergrößert, zum anderen wird zwischen den Kontaktflächen eine Art Reibungskegel ausgebildet. Die über einen solchen Reibungskegel übertragbare Kraft, bzw. das hierüber übertragbare Drehmoment bzw. Reibmoment, kann durch eine in Axialrichtung wirkende Kraft F_{N} eingestellt werden. Die übertragbare Reibkraft ergibt sich in Näherung aus dem Coulombschen Gesetz, wie bereits oben erläutert. So kann bspw. die Axialkraft F_{N} mittels der Tellerfeder 6 so eingestellt werden, dass das für den Motorstart erforderliche Drehmoment gerade noch übertragen werden kann und ein darüber hinausgehendes Drehmoment limitiert, d.h. nicht mehr übertragen wird.

Die Axialkraft F_{N} wird hier durch die Tellerfeder 6 bereitgestellt. Die Tellerfeder 6 ermöglicht zudem, dass sich der Anlasserzahnkranz 3 und der Scheibenkörper 2 auch in axialer Richtung relativ zueinander bewegen können, um bspw. eine Wärmeausdehnung in Folge der Reibung ausgleichen zu können. Eine verbesserte Wärmeabfuhr wird auch durch die Lochung 7 der Tellerfeder 6 erzielt, wie in der Fig. 1 gezeigt. Die Tellerfeder 6 drückt mit ihrem äußeren Bereich bzw. mit dem Bereich ihres Außendurchmessers 61 in axialer Richtung gegen den Anlasserzahnkranz 3. Mit ihrem inneren Bereich bzw. im Bereich ihres Innendurchmessers 62 ist die Tellerfeder 6 in axialer Richtung gegen einen Flansch bzw. Blechflansch 8 abgestützt und hierdurch auch vorgespannt. Der Flansch 8 ist doppelt abgewinkelt ausgebildet und mittels von Nieten 9 am Scheibenkörper 2 drehfest befestigt.

Der Fig. 2 ist ferner zu entnehmen, das der Scheibenkörper 2, insbesondere zur Gewichtsersparnis, nicht massiv ausgebildet ist, jedoch eine im wesentlichen konstante Materialdicke aufweist, wodurch sich mechanisch und/oder thermisch bedingte Materialspannungen gut abfangen lassen.

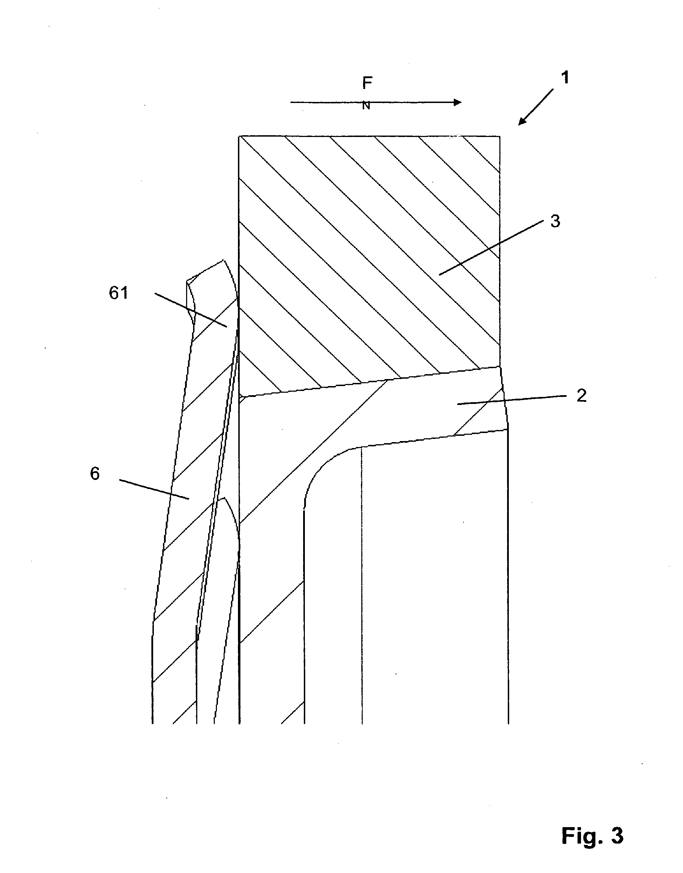

Die Fig. 3 zeigt in einer vergrößerten Ansicht den Kontaktflächenbereich bzw. die konische Reibflächenanordnung zwischen dem Anlasserzahnkranz 3 und dem Scheibenkörper 2. Die obigen Ausführungen zur Fig. 2 gelten entsprechend.

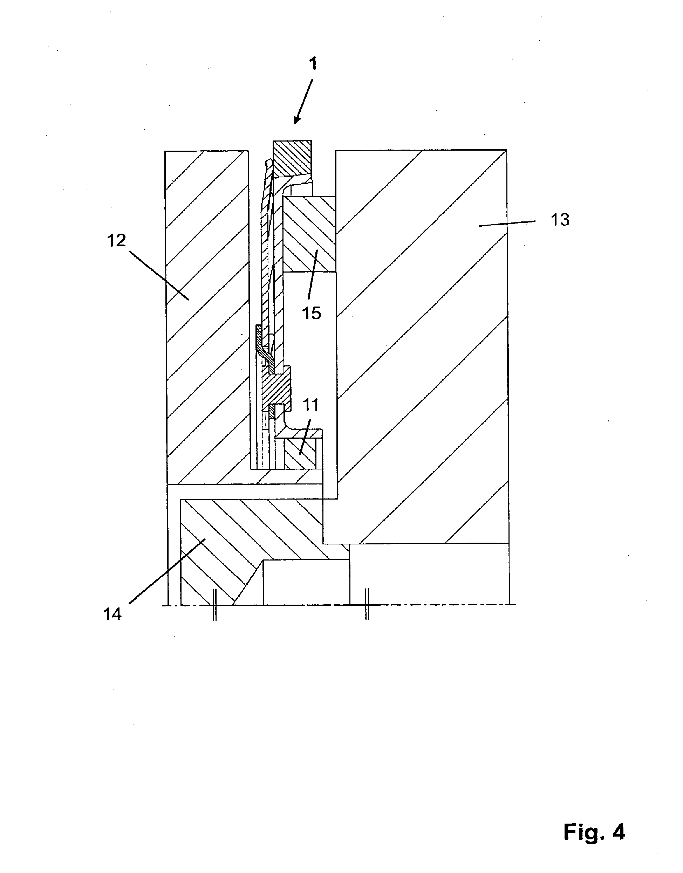

Die Fig. 4 zeigt beispielhaft eine bevorzugte Anordnung einer solchen Anlasserscheibe 1 im Antriebsstrang eines Kraftfahrzeugs. Die rotierende Anlasserscheibe 1 stützt sich mittels eines Wälzlagers 11 direkt am Motorblock 12 des Kraftfahrzeugs ab. Hierzu weist der Scheibenkörper 2 einen zylindrischen Abschnitt 21 auf, welcher die zentrale Ausnehmung des Scheibenkörpers 2 umgibt bzw. begrenzt (siehe auch Fig. 2).

Beim Starten bzw. Anlassen des Verbrennungsmotors wird der Anlasserzahnkranz 3 der Anlasserscheibe 1 von dem Ritzel eines nicht gezeigten Anlassers rotatorisch angetrieben. Durch Reibschluss zwischen der Innenumfangsfläche des Anlasserzahnkranzes 3 und der Außenumfangsfläche des Scheibenkörpers 2 wird ein Drehmoment vom Anlasserzahnkranz 3 auf den Scheibenkörper 2 übertragen. Von hier erfolgt eine Drehmomentenübertragung auf ein Zweimassenschwungrad 13, welches seinerseits eine Kurbelwelle 14 des zu startenden Verbrennungsmotors rotatorisch antreibt. Bevorzugt ist die Anlasserscheibe 1 mit der Primärschwungscheibe bzw. Primärschwungmasse des Zweimassenschwungrades 13 verbunden. Anstelle einer starren Verbindung zwischen der Anlasserscheibe 1 und dem Zweimassenschwungrad 13 kann auch ein Freilauf 15 vorgesehen sein. Mittels des Freilaufes 15 kann das Zweimassenschwungrad 13 von der Drehbewegung der Anlasserscheibe 1 lastabhängig entkoppelt werden. Dies ermöglicht z.B., dass das Ritzel des Anlassers permanent mit der Außenverzahnung 4 des Anlasserzahnkranzes 3 im Eingriff steht bzw. dauerhaft eingespurt verbleibt.

### Bezugszeichenliste

- 1: Anlasserscheibe; Anlasserrad
- 2: Scheibenkörper; Zahnkranzträger
- 21: zylindrischer Abschnitt am Scheibenkörper
- 3: Anlasserzahnkranz
- 4: Außenverzahnung; Verzahnung des Anlasserzahnkranzes
- 5: Drehachse; Rotationsachse (axiale Richtung)
- 6: Tellerfeder
- 61: Bereich des Außendurchmessers der Tellerfeder; äußerer Bereich
- 62: Bereich des Innendurchmessers der Tellerfeder; innerer Bereich
- 7: Lochung (der Tellerfeder); Ausnehmungen
- 8: Flansch; Befestigungsflansch für Tellerfeder
- 9: Niete(n)
- 11: Wälzlager
- 12: Motorblock
- 13: Zweimassenschwungrad
- 14: Kurbelwelle
- 15: Freilauf

## Patentansprüche

1. Anlassereinheit zur Anordnung im Antriebsstrang eines Kraftfahrzeugs mit einer Anlasserscheibe (1), umfassend einen Scheibenkörper (2) und einen Anlasserzahnkranz (3), der am Außenumfang des Scheibenkörpers (2) angeordnet ist, wobei der Scheibenkörper (2) und der Anlasserzahnkranz (3) als separate Teile ausgebildet sind, zwischen denen eine Rutschkupplung wirksam ist, um das übertragbare Drehmoment vom Anlasserzahnkranz (3) auf den Scheibenkörper (2) zu begrenzen, **dadurch gekennzeichnet, dass** die Anlasserscheibe (1) mittels eines Freilaufs (15) mit einer Schwungscheibe oder einem Zweimassenschwungrad (13) des Antriebsstranges verbunden ist.

2. Anlassereinheit nach Anspruch 1, **dadurch gekennzeichnet, dass** die Anlasserscheibe (1) mittels wenigstens eines Wälzlagers (11) am Motorblock (12) des Kraftfahrzeugs abgestützt ist.

3. Anlassereinheit nach Anspruch 1 oder 2, **dadurch gekennzeichnet, dass** zwischen der Innenumfangsfläche des Anlasserzahnkranzes (3) und der Außenumfangsfläche des Scheibenkörpers (2) ein Reibschluss gegeben ist, mittels dessen ein Drehmoment vom Anlasserzahnkranz (3) auf den Scheibenkörper (2) übertragbar ist, wobei über diesen Reibschluss gleichfalls die Rutschkupplung realisiert ist.

4. Anlassereinheit nach einem der Ansprüche 1 bis 3, **dadurch gekennzeichnet, dass** die Innenumfangsfläche des Anlasserzahnkranzes (3) konisch und die Außenumfangsfläche des Scheibenkörpers (2) hierzu korrespondierend ebenfalls konisch ausgebildet ist.

5. Anlassereinheit nach Anspruch 4, **dadurch gekennzeichnet, dass** der Anlasserzahnkranz (3) mit seiner konischen Innenumfangsfläche gegen die konische Außenumfangsfläche des Scheibenkörpers (2) gedrückt wird, wozu der Anlasserzahnkranz (3) in einer axialen Richtung mit einer Kraft (F_{N}) beaufschlagt ist.

6. Anlassereinheit nach Anspruch 5, **dadurch gekennzeichnet, dass** der Anlasserzahnkranz (3) mittels wenigstens einer Tellerfeder (6) in der axialen Richtung kraftbeaufschlagt ist.

7. Anlassereinheit nach Anspruch 6, **dadurch gekennzeichnet, dass** die Tellerfeder mit einer Lochung (7) ausgebildet ist.

8. Anlassereinheit nach Anspruch 6 oder 7, **dadurch gekennzeichnet, dass** die Tellerfeder (6) im Bereich (62) ihres Innendurchmessers mittels eines Flansches (8) vorgespannt ist, wobei dieser Flansch (8) drehfest mit dem Scheibenkörper (2) verbunden ist.

## Claims

1. Starter unit for arrangement in the drive train of a motor vehicle, with a starter disc (1), comprising a disc body (2) and a starter ring gear (3) which is arranged on the outer circumference of the disc body (2), the disc body (2) and the starter ring gear (3) being formed as separate parts, between which a slip clutch is active, in order to limit the transmittable torque from the starter ring gear (3) to the disc body (2), **characterized in that** the starter disc (1) is connected to a flywheel disc or to a dual-mass flywheel (13) of the drive train by means of a freewheel (15).

2. Starter unit according to Claim 1, **characterized in that** the starter disc (1) is supported on the engine block (12) of the motor vehicle by means of at least one rolling bearing (11).

3. Starter unit according to Claim 1 or 2, **characterized in that**, between the inner circumferential surface of the starter ring gear (3) and the outer circumferential surface of the disc body (2), there is a frictional connection, by means of which torque can be transmitted from the starter ring gear (3) to the disc body (2), the slip clutch likewise being implemented via this frictional connection.

4. Starter unit according to one of Claims 1 to 3, **characterized in that** the inner circumferential surface of the starter ring gear (3) is formed conically and the outer circumferential surface of the disc body (2) is likewise formed conically correspondingly thereto.

5. Starter unit according to Claim 4, **characterized in that** the starter ring gear (3) is pressed with its conical inner circumferential surface against the conical outer circumferential surface of the disc body (2), for which purpose the starter ring gear (3) is acted upon in an axial direction by a force (F_{N}).

6. Starter unit according to Claim 5, **characterized in that** the starter ring gear (3) is acted upon in the axial direction by force by means of at least one cup spring (6).

7. Starter unit according to Claim 6, **characterized in that** the cup spring is formed with a perforation (7).

8. Starter unit according to Claim 6 or 7, **characterized in that** the cup spring (6) is prestressed in the region (62) of its inside diameter by means of a flange (8), this flange (8) being connected to the disc body (2) fixedly in terms of rotation.

## Revendications

1. Unité de démarreur destinée à être agencée dans une chaîne cinématique d'un véhicule automobile, comprenant un volant de démarreur (1), comprenant un corps de volant (2) et une couronne dentée de démarreur (3), qui est disposée sur la périphérie extérieure du corps de volant (2), le corps de volant (2) et la couronne dentée de démarreur (3) étant réalisés sous forme de pièces séparées, entre lesquelles agit un embrayage à friction, afin de limiter le couple pouvant être transmis de la couronne dentée de démarreur (3) au corps de volant (2), **caractérisée en ce que** le volant de démarreur (1) est connecté au moyen d'une roue libre (15) à un volant moteur ou à un volant d'inertie à deux masses (13) de la chaîne cinématique (1).

2. Unité de démarreur selon la revendication 1, **caractérisée en ce que** le volant de démarreur (1) est supporté au moyen d'au moins un palier à roulement (11) sur le bloc moteur (12) du véhicule automobile.

3. Unité de démarreur selon la revendication 1 ou 2, **caractérisée en ce qu'**entre la surface périphérique interne de la couronne dentée de démarreur (3) et la surface périphérique externe du corps de volant (2) est prévu un engagement par friction au moyen duquel un couple peut être transmis de la couronne dentée de démarreur (3) au corps de volant (2), l'embrayage à friction étant également réalisé par le biais de cet engagement par friction.

4. Unité de démarreur selon l'une quelconque des revendications 1 à 3, **caractérisée en ce que** la surface périphérique interne de la couronne dentée de démarreur (3) est conique et la surface périphérique externe du corps de volant (2) est réalisée de manière également conique de manière correspondant à celle-ci.

5. Unité de démarreur selon la revendication 4, **caractérisée en ce que** la couronne dentée de démarreur (3) est pressée avec sa surface périphérique interne conique contre la surface périphérique externe conique du corps de volant (2), de sorte que la couronne dentée de démarreur (3) soit sollicitée dans une direction axiale avec une force (F_{N}).

6. Unité de démarreur selon la revendication 5, **caractérisée en ce que** la couronne dentée de démarreur (3) est sollicitée par force dans la direction axiale au moyen d'au moins un ressort Belleville (6).

7. Unité de démarreur selon la revendication 6, **caractérisée en ce que** le ressort Belleville est réalisé avec une perforation (7).

8. Unité de démarreur selon la revendication 6 ou 7, **caractérisée en ce que** le ressort Belleville (6) est précontraint dans la région (62) de son diamètre intérieur au moyen d'une bride (8), cette bride (8) étant connectée de manière solidaire en rotation au corps de volant (2).
